(19) Europäisches Patentamt / European Patent Office / Office européen des brevets

(11) **EP 3 943 893 B1**

(12) **EUROPÄISCHE PATENTSCHRIFT**

(45) Veröffentlichungstag und Bekanntmachung des Hinweises auf die Patenterteilung:
**12.04.2023   Patentblatt 2023/15**

(21) Anmeldenummer: **21184950.0**

(22) Anmeldetag: **12.07.2021**

(51) Internationale Patentklassifikation (IPC):
**G01D 5/38** *(2006.01)*        **G02B 5/18** *(2006.01)*

(52) Gemeinsame Patentklassifikation (CPC):
**G01D 5/38**

(54) **OPTISCHE POSITIONSMESSEINRICHTUNG**

OPTICAL POSITIONING DEVICE

DISPOSITIF OPTIQUE DE MESURE DE LA POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.07.2020   DE 102020209276**

(43) Veröffentlichungstag der Anmeldung:
**26.01.2022   Patentblatt 2022/04**

(73) Patentinhaber: **Dr. Johannes Heidenhain GmbH 83301 Traunreut (DE)**

(72) Erfinder:
• **SPECKBACHER, Peter 84558 Kirchweidach (DE)**
• **SEDLMEIER, Wolfgang 83119 Obing (DE)**
• **FUNK, Stefan 83278 Traunstein (DE)**
• **SCHWABE, Moritz 83339 Chieming (DE)**

(56) Entgegenhaltungen:
EP-A1- 3 355 034        WO-A1-2009/110892
JP-A- H04 307 329       JP-A- 2016 038 429

**Beschreibung**

## GEBIET DER TECHNIK

Die vorliegende Erfindung betrifft eine optische Positionsmesseinrichtung.

## STAND DER TECHNIK

Bekannte optische Positionsmesseinrichtungen zur Erfassung der Position von zwei zueinander beweglichen Objekten bestehen üblicherweise aus einem Maßstab, der mit einem der beiden Objekte verbunden ist, sowie einer am anderen Objekt angeordneten Abtasteinheit. Die Abtasteinheit umfasst oftmals eine Abtastplatte mit mindestens einem auf einem Trägerkörper angeordneten Abtastgitter. Die von einer Lichtquelle emittierten Strahlenbündel beaufschlagen entlang des Abtaststrahlengangs je nach genutztem Abtastprinzip den Maßstab sowie das mindestens eine Abtastgitter jeweils ein- oder mehrmalig.

Entsprechende Positionsmesseinrichtungen können z.B. in Werkzeugmaschinen eingesetzt werden, um die Relativposition von zueinander beweglichen Maschinenkomponenten zu erfassen. Insbesondere unter rauen Umgebungsbedingungen besteht dabei die Gefahr, dass das Abtastgitter verschmutzt wird. Dies ist beispielsweise durch Öl oder Abrieb möglich, die sich in den Steg-Lücke-Strukturen des Abtastgitters festsetzen und dadurch dessen optische Wirkung beeinträchtigen; derart kann auch die Funktionsfähigkeit der Positionsmesseinrichtung gefährdet werden. Um eine solche Verschmutzung des Abtastgitters zu vermeiden, ist bekannt, dieses mittels einer darauf angeordneten Glasplatte vor Verschmutzung zu schützen. Eine entsprechende Positionsmesseinrichtung ist beispielsweise aus der Druckschrift EP 3 355 034 A1 bekannt, von der bei der Bildung des Oberbegriffs der Ansprüche 1 und 9 ausgegangen wurde. Damit verbunden ist jedoch eine Vergrößerung des Bauvolumens der Abtasteinheit. Eine weitere Schutz-Maßnahme besteht darin, das Abtastgitter auf der vom Maßstab abgewandten Seite der Abtastplatte anzuordnen. Auch in diesem Fall resultiert eine Vergrößerung des Bauvolumens der Abtasteinheit. Hinzu kommt aufgrund des vergrößerten Abstands vom Maßstab eine höhere Anfälligkeit des Systems für Verkippungen von Maßstab und Abtasteinheit.

Aus der EP 1 901 041 A2 ist eine optische Positionsmesseinrichtung bekannt, bei der die verwendeten Abtastgitter auf derjenigen Seite der Abtastplatte in der Abtasteinheit angeordnet sind, die in Richtung des verwendeten Maßstabs orientiert ist, d.h. auf der Unterseite der Abtastplatte. Ohne weitere Maßnahmen ist hier jedoch kein zuverlässiger Schutz der Abtastgitter gegenüber Verschmutzungen gewährleistet. Zudem besteht die Gefahr, dass bei einer Reinigung der verschmutzten Unterseite der Abtastplatte, z.B. über ein Ultraschall-Reinigungsverfahren, die dort angeordneten Abtastgitter beschädigt werden.

## ZUSAMMENFASSUNG DER ERFINDUNG

Der vorliegenden Erfindung liegt die Aufgabe zugrunde, eine kompakt bauende optische Positionsmesseinrichtung zu schaffen, bei der ein oder mehrere der auf einer Abtastplatte angeordneten Abtastgitter möglichst verschmutzungsunempfindlich ausgebildet sind.

Diese Aufgabe wird erfindungsgemäß durch eine optische Positionsmesseinrichtung mit den Merkmalen des Anspruchs 1 gelöst. Desweiteren wird diese Aufgabe durch eine optische Positionsmesseinrichtung mit den Merkmalen des Anspruchs 9 gelöst. Vorteilhafte Ausführungen der erfindungsgemäßen optischen Positionsmesseinrichtungen ergeben sich aus den Maßnahmen, die in den abhängigen Ansprüchen aufgeführt sind.

Die erfindungsgemäße optische Positionsmesseinrichtung zur Erfassung der Position von zwei relativ zueinander beweglichen Objekten umfasst gemäß einer ersten Variante einen Maßstab, der mit einem der beiden Objekte verbunden ist, sowie eine mit dem anderen Objekt verbundenen Abtasteinheit. Diese weist mindestens eine Abtastplatte mit mindestens einem auf einem Trägerkörper angeordneten Abtastgitter auf, das auf der dem Maßstab zugewandten Seite der Abtastplatte angeordnet ist, wobei von einer Lichtquelle emittierte Strahlenbündel eines Abtaststrahlengangs den Maßstab sowie die Abtastgitter jeweils ein- oder mehrmalig beaufschlagen. Die dem Maßstab zugewandte Oberfläche der Abtastplatte ist planar ausgebildet und bildet in Richtung Maßstab den freiliegenden Abschluss der Abtastplatte. Das Abtastgitter umfasst mindestens ein erstes und ein zweites Gittermaterial, die alternierend angeordnet sind, wobei mindestens das erste Gittermaterial einen unterschiedlichen Brechungsindex gegenüber dem zweiten Gittermaterial aufweist und eine unterschiedliche Härte gegenüber dem zweiten Gittermaterial besitzt, wobei die Oberfläche der Abtastplatte zumindest eines der Gittermaterialien aufweist.

Ferner kann oberhalb der alternierend angeordneten Gittermaterialien des Abtastgitters eine durchgehende Planarisierungsschicht mit einer definierten Schichtdicke angeordnet sein, die aus einem der Gittermaterialien besteht. Desweiteren ist möglich, dass sich die Härten der ersten und zweiten Gittermaterialien mindestens um einen Faktor 2 voneinander unterscheiden.

Vorzugsweise ist dabei vorgesehen, dass sich die Härten der ersten und zweiten Gittermaterialien mindestens um einen Faktor größer 3 voneinander unterscheiden.

Mit Vorteil weist das zweite Gittermaterial eine geringere Härte auf als das erste Gittermaterial.

Ferner kann als erstes Gittermaterial SiC, d.h. Siliziumcarbid, und als zweites Gittermaterial $SiO_xN_y$, d.h. Siliziumoxynitrid, mit x = [0,5...2] und y = [0...0,5] gewählt sein.

In einer möglichen Ausführungsform ist vorgesehen, dass für die Realteile der Brechungsindizes der Gittermaterialien

$$| n1-n2 | \geq 0,5$$

gilt, mit

> n1 := Realteil des Brechungsindex des ersten Gittermaterials
> n2 := Realteil des Brechungsindex des zweiten Gittermaterials

Vorzugsweise besteht der Trägerkörper aus einem der folgenden Materialien:

- Borofloat-Glas,
- Natrium-Silikat-Glas,
- Quarz-Glas,
- Zerodur.

Die erfindungsgemäße optische Positionsmesseinrichtung zur Erfassung der Position von zwei relativ zueinander beweglichen Objekten umfasst gemäß einer zweiten Variante einen Maßstab, der mit einem der beiden Objekte verbunden ist, sowie eine mit dem anderen Objekt verbundenen Abtasteinheit. Diese umfasst mindestens eine Abtastplatte mit mindestens einem auf einem Trägerkörper angeordneten Abtastgitter, das auf der dem Maßstab zugewandten Seite der Abtastplatte angeordnet ist, wobei von einer Lichtquelle emittierte Strahlenbündel eines Abtaststrahlengangs den Maßstab sowie die Abtastgitter jeweils ein- oder mehrmalig beaufschlagen. Die dem Maßstab zugewandte Oberfläche der Abtastplatte ist planar ausgebildet und bildet in Richtung Maßstab den freiliegenden Abschluss der Abtastplatte. Das Abtastgitter umfasst mindestens ein erstes und ein zweites Gittermaterial, die alternierend angeordnet sind, wobei mindestens das erste Gittermaterial einen unterschiedlichen Brechungsindex gegenüber dem zweiten Gittermaterial aufweist. Nur die Abtastgitterbereiche mit dem ersten Gittermaterial sind mit einer Schutzschicht bedeckt, die eine Härte aufweist, die mindestens um den Faktor 2 größer ist als die Härte des ersten Gittermaterials.

Dabei kann vorgesehen sein, dass oberhalb der alternierend angeordneten Gittermaterialien des Abtastgitters eine durchgehende Planarisierungsschicht mit einer definierten Schichtdicke angeordnet ist, die aus einem der Gittermaterialien besteht.

Ferner ist möglich, dass sich die Härten der Schutzschicht und des ersten Gittermaterials mindestens um einen Faktor größer 3 voneinander unterscheiden.

Vorzugsweise besitzt die Schutzschicht eine maximale Dicke von 10nm.

Es ist möglich, dass als erstes Gittermaterial

$Ta_2O_5$, d.h. Tantalpentoxid, und als zweites Gittermaterial $SiO_xN_y$, d.h. Siliziumoxynitrid, gewählt ist, mit x = [0,5...2] und y = [0...0,5] und die Schutzschicht aus SiC, d.h. Siliziumcarbid, ausgebildet ist.

Desweiteren kann vorgesehen sein, dass für die Realteile der Brechungsindizes der Gittermaterialien

$$| n1 - n2 | \geq 0,5$$

gilt, mit

> n1 := Realteil des Brechungsindex des ersten Gittermaterials
> n2 := Realteil des Brechungsindex des zweiten Gittermaterials

Fortsetzung: Ursprüngliche Seite 6

Vorzugsweise besteht der Trägerkörper aus einem der folgenden Materialien:

- Borofloat-Glas,
- Natrium-Silikat-Glas,
- Quarz-Glas,
- Zerodur.

Das mindestens eine Abtastgitter der erfindungsgemäßen optischen Positionsmesseinrichtungen weist nunmehr eine planare Oberfläche auf, die im Fall von Verschmutzungen leicht gereinigt werden kann. Aufgrund der Anordnung des bzw. der Abtastgitter auf der dem Maßstab zugewandten Seite der Abtastplatte ist das System weniger empfindlich gegenüber eventuellen Verkippungen von Abtasteinheit und Maßverkörperung. Desweiteren lässt sich derart eine kompakte Bauweise der Abtasteinheit und damit der Positionsmesseinrichtung sicherstellen.

Weitere Einzelheiten und Vorteile der vorliegenden Erfindung seien anhand der nachfolgenden Beschreibung von Ausführungsbeispielen der erfindungsgemäßen optischen Positionsmesseinrichtungen in Verbindung mit den Figuren erläutert.

**KURZE BESCHREIBUNG DER ZEICHNUNGEN**

Es zeigt

Figur 1   eine stark schematisierte Darstellung eines Ausführungsbeispiels der erfindungsgemäßen \optischen Positionsmesseinrichtung;

Figur 2   eine Schnittansicht der Abtastplatte aus einer ersten Variante der erfindungsgemäßen optischen Positionsmesseinrichtung;

Figur 3   eine Abwandlung der Abtastplatte aus Figur 2;

Figur 4    eine Schnittansicht der Abtastplatte aus einer zweiten Variante der erfindungsgemäßen optischen Positionsmesseinrichtung;

Figur 5    eine Abwandlung der Abtastplatte aus Figur 4.

## BESCHREIBUNG DER AUSFÜHRUNGSFORMEN

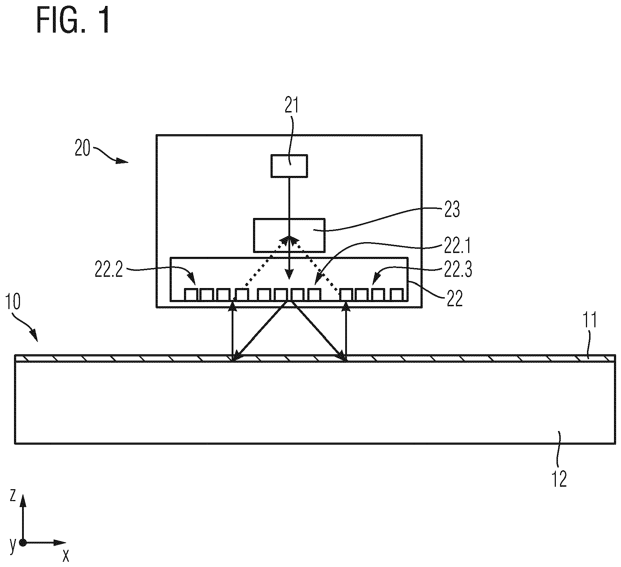

Ein Ausführungsbeispiel der erfindungsgemäßen optischen Positionsmesseinrichtung, die zur Erfassung der Position zweier relativ zueinander beweglicher Objekte dient, ist in Figur 1 in Verbindung mit dem Abtaststrahlengang in einer stark schematisierten Darstellung gezeigt.

Die optische Positionsmesseinrichtung dient zur Erfassung der Position von zwei Objekten, die entlang mindestens einer Messrichtung x beweglich zueinander angeordnet sind. Im vorliegenden Beispiel ist eine Relativbeweglichkeit der Objekte entlang einer linear verlaufenden Messrichtung x vorgesehen, d.h. die erfindungsgemäße optische Positionsmesseinrichtung ist hier als Längenmessgerät ausgebildet. Bei den in den Figuren nicht gezeigten, zueinander beweglichen Objekten kann es sich dabei z.B. um zwei zueinander bewegliche Maschinenkomponenten handeln. Mit Hilfe der von der Positionsmesseinrichtung erzeugten verschiebungsabhängigen Abtastsignale kann über eine nachgeordnete Maschinensteuerung die Bewegung der beiden Maschinenkomponenten gesteuert werden. Mit einem der beiden Objekte ist hierbei ein Maßstab 10 der Positionsmesseinrichtung verbunden, mit dem anderen Objekt eine Abtasteinheit 20 der Positionsmesseinrichtung.

Der Maßstab 10, hier ausgebildet als Linear-Maßstab, weist eine sich entlang der Messrichtung x erstreckende Messteilung 11 auf, die auf einem geeigneten Maßstabs-Trägerkörper 12 angeordnet ist. Die gitterförmige Messteilung 11 besteht aus Teilungsbereichen mit unterschiedlichen optischen Wirkungen, die entlang der Messrichtung x periodisch oder aperiodisch angeordnet sind.

Das vorliegende Ausführungsbeispiel der erfindungsgemäßen optischen Positionsmesseinrichtung ist als Auflicht-System ausgebildet. Dies bedeutet, dass als Messteilung 11 auf dem Maßstab 10 eine Reflexions-Messteilung vorgesehen ist, die verschiedene Teilungsbereiche mit unterschiedlichen Reflexionseigenschaften besitzt, also z.B. gering- und hoch-reflektierende Teilungsbereiche. Alternativ kann auch eine unterschiedliche phasenschiebende Wirkung der Teilungsbereiche der Messteilung 11 vorgesehen sein.

Auf Seiten der Abtasteinheit 20 sind in der erfindungsgemäßen optischen Positionsmesseinrichtung eine Lichtquelle 21, eine Abtastplatte 22 mit mehreren Abtastgittern 22.1 - 22.3 sowie eine elektrooptische Detektoranordnung 23 vorgesehen. Wie aus Figur 1 ersichtlich, sind die Abtastgitter 22.1 - 22.3 auf der dem Maßstab 10 zugewandten Seite der Abtastplatte 22 angeordnet. Die dem Maßstab 10 zugewandte Seite der Abtastplatte 22 bzw. Abtastgitter 22.1 - 22.3 ist dabei planar ausgebildet, was im Fall einer eventuellen Verschmutzung eine leichte Reinigung erlaubt, beispielsweise durch Abwischen oder aber mit Hilfe von Ultraschall. Mögliche Ausführungsformen derartiger Abtastgitter 22.1 - 22.3 für verschiedene Varianten der erfindungsgemäßen Positionsmesseinrichtung werden im Folgenden noch detailliert beschrieben.

Das von der Lichtquelle 21 emittierte Strahlenbündel beaufschlagt im Abtaststrahlengang dabei ein- oder mehrmals die verschiedenen Abtastgitter 22.1 - 22.3 und die Messteilung 11 auf dem Maßstab 10. Hierbei erfolgt im dargestellten Beispiel eine Aufspaltung des von der Lichtquelle her einfallenden Strahlenbündels über das zentrale Abtastgitter 22.1 in zwei Teilstrahlenbündel, die in Richtung der Messteilung 11 auf dem Maßstab 10 propagieren. Von dort werden die Teilstrahlenbündel dann in Richtung der Abtasteinheit 20 zurückreflektiert und durchlaufen die Abtastgitter 22.1 bzw. 22.2. Von diesen werden die Teilstrahlenbündel dann in die Detektionsebene der Detektoranordnung 23 umgelenkt, wo sie zur interferierenden Überlagerung kommen. Über die Detektoranordnung 23 wird das in der Detektionsebene resultierende Interferenzmuster in verschiebungsabhängige Abtastsignale umgesetzt, die dann weiterverarbeitet werden können.

Die verwendeten Abtastgitter 22.1 - 22.3 besitzen somit unterschiedliche optische Funktionalitäten in Bezug auf die Strahlenbündel oder Teilstrahlenbündel, welche diese durchlaufen. So kann im Abtaststrahlengang mittels eines entsprechenden Abtastgitters etwa eine Aufspaltung eines darauf einfallenden Strahlenbündels in mehrere Teilstrahlenbündel erfolgen, wie dies im dargestellten Beispiel über das zentrale Abtastgitter 22.1 erfolgt. Ferner kann über die Abtastgitter eine definierte optische Wirkung in Form einer strahlablenkenden oder strahlumlenkenden Wirkung auf die passierenden Strahlenbündel oder Teilstrahlenbündel ausgeübt werden; vorliegend erfolgt dies z.B. über die äußeren beiden Abtastgitter 22.2, 22.3. Darüber hinaus können bei anderen optischen Abtastprinzipien aber auch weitere optische Funktionen von dem oder den Abtastgittern übernommen werden.

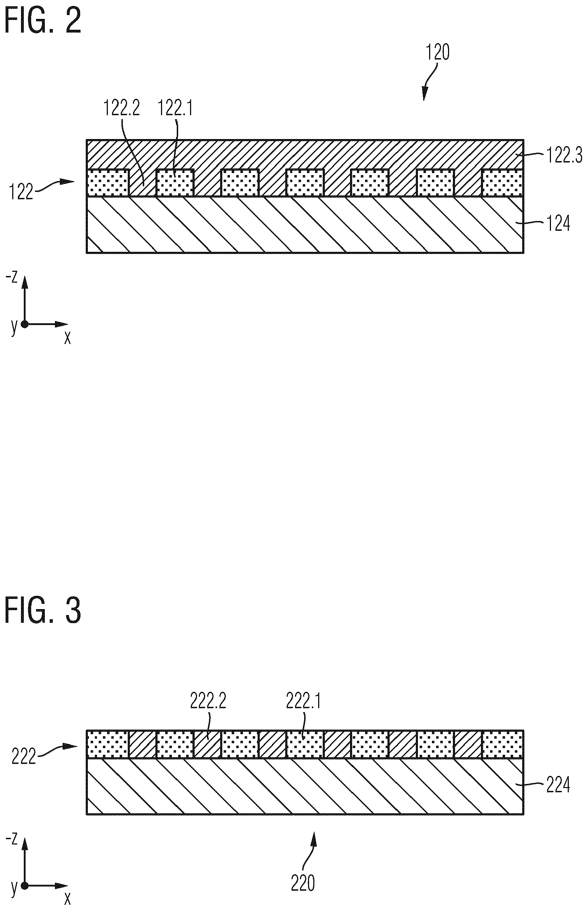

Ein Ausführungsbeispiel einer geeigneten Abtastplatte 120 mit vergrabenem Abtastgitter 122 für eine erste Variante der erfindungsgemäßen optischen Positionsmesseinrichtung wird im Folgenden anhand der Schnittansicht in Figur 2 näher erläutert. In dieser Figur ist im Unterschied zur Figur 1 wie auch in den folgenden Beispielen die planare Seite der Abtastplatte 120 nach oben gerichtet dargestellt, was keinerlei Einschränkung bedeuten soll. Maßgeblich ist jeweils lediglich, dass die planare Seite der Abtastplatte 120 in der erfindungsgemäßen Positionsmesseinrichtung dem Maßstab zugewandt ist.

Wie aus Figur 2 ersichtlich, ist in der Abtastplatte 120 das Abtastgitter 122 auf einem scheibenförmigen Trägerkörper 124 angeordnet. Der Trägerkörper 124 besteht aus einem geeigneten transparenten Material, in Betracht kommen hierfür etwa verschiedene Glas-Materialien wie z.B. Borofloat-Glas, Natrium-Silikat-Glas, Quarz-Glas oder aber Zerodur.

Das auf dem Trägerkörper 124 vorgesehene Abtastgitter 122 besteht aus zwei alternierend angeordneten Gittermaterialien 122.1, 122.2 mit im Querschnitt rechteckförmigen oder quadratischen Abtastgitterbereichen. Die Ausdehnung der Abtastgitterbereiche mit den verschiedenen Gittermaterialien 122.1, 122.2 entlang der Richtungen x und y ist dabei abhängig vom jeweiligen Abtastprinzip; typische Strukturbreiten entlang der Messrichtung x liegen im Bereich von wenigen hundert Nanometern bis zu wenigen Mikrometern. Die aus dem ersten Gittermaterial 122.1 auf dem Trägerkörper 124 ausgebildeten Stege besitzen eine Höhe, die typischerweise kleiner $2\,\mu m$ gewählt ist.

Die beiden Gittermaterialien 122.1, 122.2 des Abtastgitters 122 werden hier in dieser Variante der erfindungsgemäßen optischen Positionsmesseinrichtung so gewählt, dass das erste Gittermaterial 122.1 einen unterschiedlichen Brechungsindex als auch eine unterschiedliche Härte gegenüber dem zweiten Gittermaterial 122.2 aufweist.

Als erstes Gittermaterial 122.1 fungiert in diesem Beispiel Siliziumcarbid SiC, als zweites Gittermaterial dient Siliziumoxynitrid $SiO_xN_y$. Für die stöchiometrischen Anteile x, y von Sauerstoff bzw. Stickstoff gilt hierbei x = [0,5...2] und y = [0...0,5].

In Bezug auf die unterschiedliche Härte der beiden Gittermaterialien 122.1, 122.2 des Abtastgitters 122 erweist sich ferner als günstig, wenn sich deren Härten mindestens um den Faktor 2 voneinander unterscheiden. Bei der Wahl der beiden Gittermaterialien 122.1, 122.2 wie vorstehend erwähnt, ist dies gewährleistet. So weist das erste Gittermaterial Siliziumcarbid SiC beispielsweise im Fall der Aufbringung über PECVD-Verfahren (Plasma Enhanced Chemical Vapor Deposition) eine Härte von ca. 28 GPa auf; das zweite Gittermaterial Siliziumoxynitrid $SiO_xN_y$ besitzt z.B. bei einer Aufbringung über PECVD-Verfahren eine Härte im Bereich 4 ... 10 GPa, abhängig von jeweiligen Stickstoff-Gehalt. In dieser konkreten Ausführung besitzt das zweite Gittermaterial Siliziumoxynitrid $SiO_xN_y$ damit sogar eine um das 3 - 4-fache geringere Härte als das erste Gittermaterial Siliziumcarbid SiC. Hinsichtlich der unterschiedlichen Brechungsindizes der beiden Gittermaterialien 122.1, 122.2 ist möglichst die nachfolgende Bedingung für den Realteil n1, n2 der jeweiligen Brechungsindizes bei der Wellenlänge der verwendeten Lichtquelle erfüllt:

$$| n1 - n2 | \geq 0,5$$

mit

　　n1 := Realteil des Brechungsindex des ersten Gittermaterials

n2 := Realteil des Brechungsindex des zweiten Gittermaterials

Im Fall des im vorliegenden Beispiel verwendeten zweiten Gittermaterials Siliziumoxynitrid $SiO_xN_y$ lässt sich der Brechungsindex durch eine geeignete Wahl des Stickstoffgehalts definiert einstellen, um darüber die Einhaltung der vorgenannten Bedingung zu gewährleisten.

Bei der in Figur 2 gezeigten Abtastplatte 120 einer ersten Variante der erfindungsgemäßen optischen Positionsmesseinrichtung ist ferner noch vorgesehen, dass oberhalb der alternierend angeordneten ersten und zweiten Gittermaterialien 122.1, 122.2 des Abtastgitters 122 eine durchgehende Planarisierungsschicht 122.3 aus einem der beiden Gittermaterialien 122.1, 122.2 in einer definierten Schichtdicke angeordnet ist; in typischen Anwendungen wird die Dicke der Planarisierungsschicht 122.3 kleiner $1\,\mu m$ gewählt. Aufgrund dieser Ausbildung sei bei einem derartigen Aufbau auch von einem vergrabenen Abtastgitter die Rede. Konkret besteht die durchgehende Planarisierungsschicht 122.3 vorliegend aus dem zweiten Gittermaterial Siliziumoxynitrid $SiO_xN_y$. Die Planarisierungsschicht 122.3 stellt damit in Richtung Maßstab den freiliegenden Abschluss der Abtastplatte 120 dar. Im Fall einer eventuellen Verschmutzung kann die Planarisierungsschicht 122.3 einfach gereinigt werden; es verbleiben keine Verunreinigungen am Abtastgitter 122, die ggf. dessen optische Funktionalität beeinträchtigen könnten.

Als optisch wirksames Gitter mit einer Steg-Lücke-Struktur fungieren in der Abtastplatte 120 der erfindungsgemäßen Positionsmesseinrichtung primär die Abtastgitterbereiche mit dem ersten und damit härteren Gittermaterial 122.1, d.h. das optisch wirksame Gitter besteht hier aus Siliziumcarbid SiC. Je nach Abtastprinzip und erforderlicher Funktion im Abtaststrahlengang werden diese Abtastgitterbereiche bei der Herstellung in der erforderlichen Geometrie strukturiert auf dem Trägerkörper 124 aufgebracht. Anschließend wird das zweite, weichere Gittermaterial 122.2 als Füllschicht zwischen den Abtastgitterbereichen mit dem ersten Gittermaterial 122.1 und als Planarisierungsschicht 122.3 darüber in der gewünschten Schichtdicke aufgebracht und damit das optische wirksame Gitter quasi vergraben. In einem weiteren Verfahrensschritt wird über ein geeignetes Polierverfahren die Oberseite der Planarisierungsschicht 122.3 poliert und damit eine planare Oberfläche der Abtastplatte 120 bzw. des Abtastgitters 122 geschaffen.

Eine geringfügig gegenüber dem ersten Ausführungsbeispiel modifizierte Version einer Abtastplatte 220 für die erste Variante der erfindungsgemäßen optischen Positionsmesseinrichtung mit planarisiertem Abtastgitter 222 ist in Figur 3 in einer weiteren Schnittansicht gezeigt. Nachfolgend sei i.w. nur auf die maßgeblichen Unterschiede zum vorherigen Ausführungsbeispiel eingegangen.

Die ersten und zweiten Gittermaterialien 222.1, 222.2 sind hier identisch zum vorherigen Beispiel gewählt. Im Unterschied hierzu weist die Abtastplatte 220 hier jedoch keine Planarisierungsschicht über dem Abtastgitter 222 auf. In einem Polierprozess wurde hier die ursprünglich vorhandene Planarisierungsschicht entfernt. Das gegenüber dem Siliziumoxynitrid-Material der Planarisierungsschicht deutlich härtere erste Gittermaterial 222.1 (Siliziumcarbid) dient in diesem Prozessschritt dabei als Polierstop für das planarisierte Abtastgitter 222 auf der Abtastplatte 220, das aus alternierend angeordneten Abtastgitterbereichen mit dem ersten Gittermaterial 222.1 (Siliziumcarbid) und dem zweiten Gittermaterial 222.2 (Siliziumoxynitrid) auf dem Trägerkörper 224 besteht. Im Zusammenhang mit einem derart ausgebildeten Abtastgitter 222 sei daher nicht von einem vergrabenen Abtastgitter 222 gesprochen, sondern von einem planarisierten Abtastgitter 222. Auch hier ist aufgrund der planen Oberfläche des Abtastgitters 222 eine besonders einfache Reinigung im Verschmutzungsfall möglich.

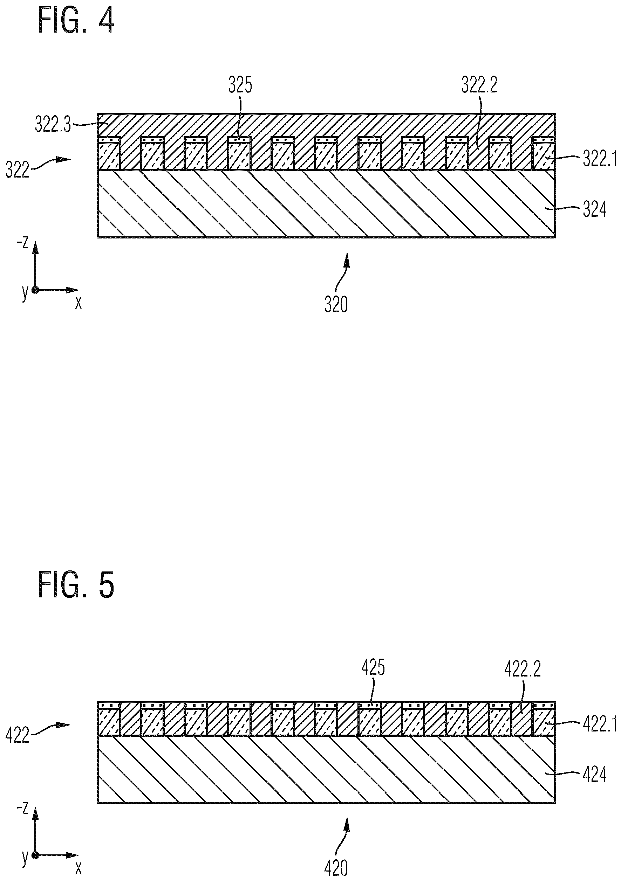

Figur 4 zeigt eine Schnittansicht der Abtastplatte 320 einer zweiten Variante der erfindungsgemäßen optischen Positionsmesseinrichtung; hierbei handelt es sich erneut um ein Beispiel mit einem vergrabenen Abtastgitter 322. In dieser Figur ist im Unterschied zur Figur 1 wiederum die planare Seite der Abtastplatte 320 nach oben gerichtet dargestellt, was keinerlei Einschränkung bedeuten soll. Maßgeblich ist jeweils lediglich, dass die planare Seite der Abtastplatte 320 in der erfindungsgemäßen Positionsmesseinrichtung dem Maßstab zugewandt ist.

Wie aus Figur 4 ersichtlich, ist in der Abtastplatte 320 das Abtastgitter 322 auf einem scheibenförmigen Trägerkörper 324 angeordnet, der aus einem geeigneten transparenten Material ausgebildet ist; in Betracht kommen hierfür etwa verschiedene Glas-Materialien wie z.B. Borofloat-Glas, Natrium-Silikat-Glas, Quarz-Glas oder aber Zerodur.

Das auf dem Trägerkörper 324 vorgesehene Abtastgitter 322 besteht aus zwei alternierend angeordneten Gittermaterialien 322.1, 322.2 mit im Querschnitt rechteckförmigen oder quadratischen Abtastgitterbereichen. Die Ausdehnung der Abtastgitterbereiche mit den verschiedenen Gittermaterialien 322.1, 322.2 entlang der Richtungen x und y ist abhängig vom jeweiligen Abtastprinzip; typische Strukturbreiten entlang der Messrichtung x liegen im Bereich von wenigen hundert Nanometern bis zu wenigen Mikrometern. Die aus dem ersten Gittermaterial 322.1 auf dem Trägerkörper 324 ausgebildeten Stege besitzen eine Höhe, die typischerweise kleiner $2\,\mu m$ gewählt ist.

Die beiden Gittermaterialien 322.1, 322.2 des Abtastgitters 322 werden hier so gewählt, dass das erste Gittermaterial 322.1 einen unterschiedlichen Brechungsindex gegenüber dem zweiten Gittermaterial 322.2 aufweist.

Die Abtastgitterbereiche mit dem ersten Gittermaterial 322.1 sind hier desweiteren mit einer Schutzschicht 325 bedeckt. Das Material der Schutzschicht 325 wird vorzugsweise so gewählt, dass dieses eine Härte aufweist, die mindestens um den Faktor 2 größer ist als die Härte des darunter befindlichen, ersten Gittermaterials 322.1. Die Dicke der Schutzschicht 325 wird bevorzugt kleiner als 10nm gewählt und beträgt in vorteilhaften Ausführungsformen 3 - 6nm.

Die Anordnung der harten Schutzschicht 325 auf den Abtastgitterbereichen mit dem ersten Gittermaterial 322.1 ist vorliegend durch die Wahl des ersten Gittermaterials 322.1 bedingt. So ist hier als erstes Gittermaterial Tantalpentoxid $Ta_2O_5$ vorgesehen, das bei einer gesputterten Aufbringung eine Härte von ca. 7 GPa besitzt und damit vergleichbar hart ist wie das hier gewählte zweite Gittermaterial Siliziumoxynitrid $SiO_xN_y$, für dessen stöchiometrischen Anteile x, y von Sauerstoff bzw. Stickstoff $x = [0,5...2]$ und $y = [0...0,5]$ gilt. Dieses Material weist bei einer Aufbringung über PECVD-Verfahren (Plasma Enhanced Chemical Vapor Deposition) eine Härte im Bereich 4 ... 10 GPa auf, abhängig vom jeweiligen Stickstoff-Gehalt.

Als Material für die Schutzschicht 325 ist vorliegend Siliziumcarbid SiC vorgesehen, das bei der Aufbringung über PECVD-Verfahren eine Härte von ca. 28 GPa besitzt und damit die Härte des ersten Gittermaterials $Ta_2O_5$ sogar um das 3 - 4-fache übertrifft.

Hinsichtlich der unterschiedlichen Brechungsindizes der beiden Gittermaterialien 322.1, 322.2 ist vorzugsweise die nachfolgende Bedingung für den Realteil n1, n2 der jeweiligen Brechungsindizes bei der Wellenlänge der verwendeten Lichtquelle erfüllt:

$$| n1\text{-}n2 | \geq 0{,}5$$

mit

n1 := Realteil des Brechungsindex des ersten Gittermaterials
n2 := Realteil des Brechungsindex des zweiten Gittermaterials

Im Fall des in diesem Beispiel verwendeten zweiten Gittermaterials Siliziumoxynitrid $SiO_xN_y$ lässt sich der Brechungsindex durch eine geeignete Wahl des Stickstoffgehalts definiert einstellen, um darüber die Einhaltung der vorgenannten Bedingung zu gewährleisten.

Bei der in Figur 4 gezeigten Abtastplatte 320 einer zweiten Variante der erfindungsgemäßen optischen Positionsmesseinrichtung ist ferner noch vorgesehen, dass oberhalb der alternierend angeordneten ersten und zweiten Gittermaterialien 322.1, 322.2 des Abtastgitters 322 eine durchgehende Planarisierungsschicht 322.3 aus einem der beiden Gittermaterialien 322.1, 322.2 in einer definierten Schichtdicke angeordnet ist; in typischen Anwendungen wird die Dicke der Planarisierungsschicht 322.3 kleiner $1\,\mu m$ gewählt. Aufgrund dieser Ausbildung sei dieser Aufbau wiederum als vergrabenes Abtastgitter bezeichnet. Konkret besteht die durchgehende Planarisierungsschicht 322.3 vorliegend aus dem zweiten Gittermaterial Siliziumoxynitrid $SiO_xN_y$. Die Planarisierungsschicht 322.3 stellt damit in Richtung Maßstab den freiliegenden Abschluss der Abtastplatte 320 dar. Im Fall einer eventuellen Verschmutzung kann die Planarisierungsschicht 322.3 einfach gereinigt werden; es verbleiben keine Verunreinigungen am Abtastgitter 322, die ggf. dessen optische Funktionalität beeinträchtigen könnten.

Als optisch wirksames Gitter mit einer Steg-Lücke-Struktur fungieren in der Abtastplatte 320 der zweiten Variante der erfindungsgemäßen Positionsmesseinrichtung primär die Abtastgitterbereiche mit dem ersten Gittermaterial 322.1, d.h. das optisch wirksame Gitter besteht hier aus Tantalpentoxid $Ta_2O_5$. Je nach Abtastprinzip und erforderlicher Funktion im Abtaststrahlengang werden diese Abtastgitterbereiche bei der Herstellung in der erforderlichen Geometrie, inklusive der Schutzschicht 325, strukturiert auf dem Trägerkörper 324 aufgebracht. Anschließend wird das zweite Gittermaterial 322.2 als Füllschicht zwischen den Abtastgitterbereichen mit dem ersten Gittermaterial 322.1 und der Schutzschicht 325 und als Planarisierungsschicht 322.3 darüber aufgebracht und damit das optische wirksame Gitter vergraben. In einem weiteren Verfahrensschritt wird über ein geeignetes Polierverfahren die Oberseite der Planarisierungsschicht 322.3 poliert und damit eine planare Oberfläche der Abtastplatte 320 bzw. des Abtastgitters 322 geschaffen.

Eine geringfügig gegenüber dem vorhergehenden Ausführungsbeispiel abgewandelte Version einer Abtastplatte 420 für die zweite Variante der erfindungsgemäßen optischen Positionsmesseinrichtung mit planarisiertem Abtastgitter 422 ist in Figur 5 in einer weiteren Schnittansicht gezeigt. Nachfolgend sei i.w. nur auf die maßgeblichen Unterschiede zum vorherigen Ausführungsbeispiel eingegangen.

Die ersten und zweiten Gittermaterialien 422.1, 422.2 sowie das Material der Schutzschicht 425 sind hier identisch zum vorherigen Beispiel gewählt, d.h. als erstes Gittermaterial ist Tantalpentoxid $Ta_2O_5$ vorgesehen und als zweites Gittermaterial Siliziumoxynitrid $SiO_xN_y$, die Schutzschicht 425 besteht aus Siliziumcarbid SiC. Im Unterschied zum vorigen Beispiel weist die Abtastplatte 420 hier jedoch keine Planarisierungsschicht über dem Abtastgitter 422 auf. In einem Polierprozess wurde hier ursprünglich vorhandene Planarisierungsschicht entfernt. Das gegenüber dem Siliziumoxynitrid-Material der Planarisierungsschicht deutlich härtere Material der Schutzschicht 425 (Siliziumcarbid) dient in diesem Prozessschritt dabei als Polierstop für das planarisierte Abtastgitter 422 auf der Abtastplatte 420, das aus alternierend angeordneten Abtastgitterbereichen mit dem ersten Gittermaterial 422.1 (Tantalpentoxid) und darauf angeordneter Schutzschicht 425 und dem zweiten Gittermaterial 422.2 (Siliziumoxynitrid) auf dem Trägerkörper 424 besteht. Im Zusammenhang mit einem derart ausgebildeten Abtastgitter 422 wird daher hier ebenfalls nicht von einem vergrabenen Abtastgitter 422 gesprochen, sondern von einem planarisierten Abtastgitter 422. Auch bei diesem Beispiel ist aufgrund der planen Oberfläche eine besonders einfache Reinigung des Abtastgitters 422 im Verschmutzungsfall möglich.

Neben den erläuterten Ausführungsbeispielen und Varianten der erfindungsgemäßen optischen Positionsmesseinrichtung gibt es im Rahmen der vorliegenden Erfindung selbstverständlich noch weitere Ausgestaltungsmöglichkeiten.

So ist es natürlich möglich, die erfindungsgemäße optische Positionsmesseinrichtung mit unterschiedlichsten Abtaststrahlengängen auszubilden und dafür dann geeignete Abtastplatten bzw. Abtastgitter vorzusehen; hierzu gehören alternativ zum oben erläuterten Beispiel natürlich auch Durchlicht-Abtastungen. Im Zusammenhang mit derartigen alternativen Abtaststrahlengängen sei beispielsweise auf die EP 1 901 041 A2 verwiesen.

Desweiteren kann vorgesehen werden, mit Hilfe der erfindungsgemäßen optischen Positionsmesseinrichtung rotatorische Relativbewegungen zweier Objekte zu erfassen, die um eine Rotationsachse relativ zueinander verdrehbar sind. In diesem Fall wäre die entsprechende Messteilung dann als kreisringförmig angeordnete Radialteilung auszubilden usw..

**Patentansprüche**

1. Optische Positionsmesseinrichtung zur Erfassung der Position von zwei relativ zueinander beweglichen Objekten mit

   - einem Maßstab (10), der mit einem der beiden Objekte verbunden ist, sowie
   - einer mit dem anderen Objekt verbundenen Abtasteinheit (20), die mindestens eine Abtastplatte (22; 122; 222) mit mindestens einem auf einem Trägerkörper (124; 224) angeordneten Abtastgitter (22.1, 22.2, 22.3; 122; 222) umfasst, das auf der dem Maßstab (10) zugewandten Seite der Abtastplatte (22; 122; 222) angeordnet ist, wobei von einer Lichtquelle (21) emittierte Strahlenbündel eines Abtaststrahlengangs den Maßstab (10) sowie die Abtastgitter (22.1, 22.2, 22.3; 122; 222) jeweils ein- oder mehrmalig beaufschlagen, und wobei
   - das Abtastgitter (22.1, 22.2, 22.3; 122; 222) mindestens ein erstes und ein zweites Gittermaterial (122.1, 122.2; 222.1, 222.2) umfasst, die alternierend angeordnet sind, wobei mindestens das erste Gittermaterial (122.1; 222.1) einen unterschiedlichen Brechungsindex gegenüber dem zweiten Gittermaterial (122.2; 222.2) aufweist und eine unterschiedliche Härte gegenüber dem zweiten Gittermaterial (122.2; 222.2) besitzt, wobei die dem Maßstab (10) zugewandte Oberfläche der Abtastplatte (22; 122; 222) planar ausgebildet ist und in Richtung Maßstab (10) den freiliegenden Abschluss der Abtastplatte (22; 122; 222) bildet,

**dadurch gekennzeichnet,**
**dass** die Oberfläche der Abtastplatte (22; 122; 222) zumindest eines der Gittermaterialien (122.1, 122.2; 222.1, 222.2) aufweist.

2. Optische Positionsmesseinrichtung nach Anspruch 1, **dadurch gekennzeichnet, dass** oberhalb der alternierend angeordneten Gittermaterialien (122.1, 122.2; 222.1, 222.2) des Abtastgitters (22.1, 22.2, 22.3; 122; 222) eine durchgehende Planarisierungsschicht (122.3) mit einer definierten Schichtdicke angeordnet ist, die aus einem der Gittermaterialien (122.2) besteht.

3. Optische Positionsmesseinrichtung nach mindestens einem der vorhergehenden Ansprüche, **dadurch gekennzeichnet, dass** sich die Härten der ersten und zweiten Gittermaterialien (122.1, 122.2; 222.1, 222.2) mindestens um einen Faktor 2 voneinander unterscheiden.

4. Optische Positionsmesseinrichtung nach Anspruch 3, **dadurch gekennzeichnet, dass** sich die Härten der ersten und zweiten Gittermaterialien (122.1, 122.2; 222.1, 222.2) mindestens um einen Faktor größer 3 voneinander unterscheiden.

5. Optische Positionsmesseinrichtung nach mindestens einem der vorhergehenden Ansprüche, **dadurch gekennzeichnet, dass** das zweite Gittermaterial (122.2; 222.2) eine geringere Härte aufweist als das erste Gittermaterial (122.1; 222.1).

6. Optische Positionsmesseinrichtung nach mindestens einem der vorhergehenden Ansprüche, **dadurch gekennzeichnet, dass** als erstes Gittermaterial (122.1; 222.1) SiC, d.h. Siliziumcarbid, und als zweites Gittermaterial (122.2; 222.2) $SiO_xN_y$, d.h. Siliziumoxynitrid, mit x = [0,5...2] und y = [0...0,5] gewählt ist.

7. Optische Positionsmesseinrichtung nach mindestens einem der vorhergehenden Ansprüche, **dadurch gekennzeichnet, dass**
für die Realteile der Brechungsindizes der Gittermaterialien (122.1, 122.2; 222.1, 222.2)

$$| n1 - n2 | \geq 0,5$$

gilt, mit

n1 := Realteil des Brechungsindex des ersten Gittermaterials
n2 := Realteil des Brechungsindex des zweiten Gittermaterials

8. Optische Positionsmesseinrichtung nach mindestens einem der vorhergehenden Ansprüche, **dadurch gekennzeichnet, dass** der Trägerkörper (124; 224) aus einem der folgenden Materialien besteht:

- Borofloat-Glas,
- Natrium-Silikat-Glas,
- Quarz-Glas,
- Zerodur.

9. Optische Positionsmesseinrichtung zur Erfassung der Position von zwei relativ zueinander beweglichen Objekten mit

- einem Maßstab (10), der mit einem der beiden Objekte verbunden ist, sowie
- einer mit dem anderen Objekt verbundenen Abtasteinheit (20), die mindestens eine Abtastplatte (22; 322; 422) mit mindestens einem auf einem Trägerkörper (324; 424) angeordneten Abtastgitter (22.1, 22.2, 22.3; 322; 422) umfasst, das auf der dem Maßstab (10) zugewandten Seite der Abtastplatte (22; 322; 422) angeordnet ist, wobei von einer Lichtquelle (21) emittierte Strahlenbündel eines Abtaststrahlengangs den Maßstab (10) sowie die Abtastgitter (22.1, 22.2, 22.3; 322; 422) jeweils ein- oder mehrmalig beaufschlagen, und wobei
- das Abtastgitter (22.1, 22.2, 22.3; 322; 422) mindestens ein erstes und ein zweites Gittermaterial (322.1, 322.2; 422.1, 422.2) umfasst, die alternierend angeordnet sind, wobei mindestens das erste Gittermaterial (322.1; 422.1) einen unterschiedlichen Brechungsindex gegenüber dem zweiten Gittermaterial (322.2; 422.2) aufweist, wobei die dem Maßstab (10) zugewandte Oberfläche der Abtastplatte (22; 322; 422) planar ausgebildet ist, und in Richtung Maßstab (10) den freiliegenden Abschluss der Abtastplatte (22; 322; 422) bildet,

**dadurch gekennzeichnet,**
**dass** nur die Abtastgitterbereiche mit dem ersten Gittermaterial (322.1; 422.1) mit einer Schutzschicht (325; 425) bedeckt sind, die eine Härte aufweist, die mindestens um den Faktor 2 größer ist als die Härte des ersten Gittermaterials (322.1; 422.1).

10. Optische Positionsmesseinrichtung nach Anspruch 9, **dadurch gekennzeichnet, dass** oberhalb der alternierend angeordneten Gittermaterialien (322.1, 322.2; 422.1, 422.2) des Abtastgitters (22.1, 22.2, 22.3; 322; 422) eine durchgehende Planarisierungsschicht (322.3) mit einer definierten Schichtdicke angeordnet ist, die aus einem der Gittermaterialien (322.1) besteht.

11. Optische Positionsmesseinrichtung nach Anspruch 9 oder 10, **dadurch gekennzeichnet, dass** sich die Härten der Schutzschicht (325; 425) und des ersten Gittermaterials (322.1; 422.1) mindestens um einen Faktor größer 3 voneinander unterscheiden.

12. Optische Positionsmesseinrichtung nach mindestens einem der Ansprüche 9 - 11, **dadurch gekennzeichnet, dass** die Schutzschicht (325; 425) eine maximale Dicke von 10nm besitzt.

13. Optische Positionsmesseinrichtung nach mindestens einem der Ansprüche 9 - 12, **dadurch gekennzeichnet, dass** als erstes Gittermaterial (322.1; 422.1) $Ta_2O_5$, d.h. Tantalpentoxid, und als zweites Gittermaterial (322.2; 422.2) $SiO_xN_y$, d.h. Siliziumoxynitrid, gewählt ist, mit x = [0,5...2] und y = [0...0,5] und die Schutzschicht (325; 425) aus SiC, d.h. Siliziumcarbid, ausgebildet ist.

14. Optische Positionsmesseinrichtung nach mindestens einem der Ansprüche 9 - 12, **dadurch gekennzeichnet, dass**
für die Realteile der Brechungsindizes der Gittermaterialien (322.1, 322.2; 422.1, 422.2)

$$| n1 - n2 | \geq 0,5$$

gilt, mit

n1 := Realteil des Brechungsindex des ersten Gittermaterials
n2 := Realteil des Brechungsindex des zweiten Gittermaterials

15. Optische Positionsmesseinrichtung nach mindestens einem der Ansprüche 9 - 14, **dadurch gekennzeichnet, dass** der Trägerkörper (324; 424) aus einem der folgenden Materialien besteht:

- Borofloat-Glas,
- Natrium-Silikat-Glas,
- Quarz-Glas,
- Zerodur.

**Claims**

1. Optical position measuring device for detecting the position of two objects that are movable relative to one another, the optical position measuring device having:

- a scale (10), which is connected to one of the two objects, and
- a scanning unit (20), which is connected to the other object and comprises at least one scanning plate (22; 122; 222) having at least one scanning grating (22.1, 22.2, 22.3; 122; 222) that is arranged on a carrier element (124; 224) and is arranged on that side of the scanning plate (22; 122; 222) that faces towards the scale (10), wherein beams, emitted by a light source (21), with a scanning beam path impinge on the scale (10) and the scanning grating (22.1, 22.2, 22.3; 122; 222) in each case once or multiple times, and wherein
- the scanning grating (22.1, 22.2, 22.3; 122; 222) comprises at least one first and one second grating material (122.1, 122.2; 222.1, 222.2), which are arranged in alternation, wherein at least the first grating material (122.1; 222.1) has a different refractive index than the second grating material (122.2; 222.2) and has a different hardness than the second grating material (122.2; 222.2),

wherein that surface of the scanning plate (22; 122; 222) that faces towards the scale (10) has a planar form and forms the exposed termination of the scanning plate (22; 122; 222) in the direction of the scale (10), **characterized in that** the surface of the scanning plate (22; 122; 222) comprises at least one of the grating materials (122.1, 122.2; 222.1, 222.2).

2. Optical position measuring device according to Claim 1, **characterized in that** a continuous planarization layer (122.3), which has a defined layer thickness and consists of one of the grating materials (122.2), is arranged above the alternating grating materials (122.1, 122.2; 222.1, 222.2) of the scanning grating (22.1, 22.2, 22.3; 122; 222).

3. Optical position measuring device according to at least either of the preceding claims, **characterized in that** the hardnesses of the first and second grating materials (122.1, 122.2; 222.1, 222.2) differ from one another at least by a factor of 2.

4. Optical position measuring device according to Claim 3, **characterized in that** the hardnesses of the first and second grating materials (122.1, 122.2; 222.1, 222.2) differ from one another at least by a factor of greater than 3.

5. Optical position measuring device according to at least one of the preceding claims, **characterized in that** the second grating material (122.2; 222.2) has a lower hardness than the first grating material (122.1; 222.1).

6. Optical position measuring device according to at least one of the preceding claims, **characterized in that** SiC, i.e. silicon carbide, is selected as first grating material (122.1; 222.1), and SiO$_x$N$_y$, i.e. silicon oxynitride, where x = [0.5...2] and y = [0...0.5] is selected as second grating material (122.2; 222.2) .

7. Optical position measuring device according to at least one of the preceding claims, **characterized in that,** for the real parts of the refractive indices of the grating materials (122.1, 122.2; 222.1, 222.2), it holds true that

$$|n1 - n2| \geq 0.5,$$

where

   n1:= real part of the refractive index of the first grating material
   n2:= real part of the refractive index of the second grating material.

8. Optical position measuring device according to at least one of the preceding claims, **characterized in that** the carrier element (124; 224) consists of one of the following materials:

   - Borofloat glass,
   - sodium silicate glass,
   - quartz glass,
   - Zerodur.

9. Optical position measuring device for detecting the position of two objects that are movable relative to one another, the optical position measuring device having:

   - a scale (10), which is connected to one of the two objects, and
   - a scanning unit (20), which is connected to the other object and comprises at least one scanning plate (22; 322; 422) having at least one scanning grating (22.1, 22.2, 22.3; 322; 422) that is arranged on a carrier element (324; 424) and is arranged on that side of the scanning plate (22; 322; 422) that faces towards the scale (10), wherein beams, emitted by a light source (21), with a scanning beam path impinge on the scale (10) and the scanning grating (22.1, 22.2, 22.3; 322; 422) in each case once or multiple times, and wherein
   - the scanning grating (22.1, 22.2, 22.3; 322; 422) comprises at least one first and one second grating material (322.1, 322.2; 422.1, 422.2), which are arranged in alternation, wherein at least the first grating material (322.1; 422.1) has a different refractive index than the second grating material (322.2; 422.2),

   wherein that surface of the scanning plate (22; 322; 422) that faces towards the scale (10) has a planar form and forms the exposed termination of the scanning plate (22; 322; 422) in the direction of the scale (10), **characterized in that** only the scanning grating regions comprising the first grating material (322.1; 422.1) are covered by a protective layer (325; 425), which has a hardness that is greater than the hardness of the first grating material (322.1; 422.1) at least by a factor of 2.

10. Optical position measuring device according to Claim 9, **characterized in that** a continuous planarization layer (322.3), which has a defined layer thickness and consists of one of the grating materials (322.1), is arranged above the alternating grating materials (322.1, 322.2; 422.1, 422.2) of the scanning grating (22.1, 22.2, 22.3; 322; 422).

11. Optical position measuring device according to Claim 9 or 10, **characterized in that** the hardnesses of the protective layer (325; 425) and of the first grating material (322.1; 422.1) differ from one another at least by a factor of greater than 3.

12. Optical position measuring device according to at least one of Claims 9-11, **characterized in that** the protective layer (325; 425) has a maximum thickness of 10 nm.

13. Optical position measuring device according to at least one of Claims 9-12, **characterized in that** Ta$_2$O$_5$, i.e. tantalum pentoxide, is selected as first grating material (322.1; 422.1), and SiO$_x$N$_y$, i.e. silicon oxynitride, where x = [0.5...2] and y = [0...0.5] is selected as second grating material (322.2; 422.2), and the protective layer (325; 425) is made from SiC, i.e. silicon carbide.

14. Optical position measuring device according to at least one of Claims 9-12, **characterized in that,** for the real parts of the refractive indices of the grating materials (322.1, 322.2; 422.1, 422.2), it holds true that

$$|n1 - n2| \geq 0.5,$$

where

   n1:= real part of the refractive index of the first grating material
   n2:= real part of the refractive index of the second grating material.

15. Optical position measuring device according to at least one of Claims 9-14, **characterized in that** the carrier element (324; 424) consists of one of the following materials:

- Borofloat glass,
- sodium silicate glass,
- quartz glass,
- Zerodur.

## Revendications

1. Dispositif de mesure de position optique destiné à détecter la position de deux objets mobiles l'un par rapport à l'autre, ledit dispositif comprenant

- une échelle (10) qui est reliée à l'un des deux objets, et
- une unité de balayage (20) qui est reliée à l'autre objet et qui comprend au moins une plaque de balayage (22 ; 122 ; 222) pourvue d'au moins un réseau de balayage (22.1, 22.2, 22.3 ; 122 ; 222) disposé sur un corps de support (1214 ; 224) et agencé du côté de la plaque de balayage (22 ; 122 ; 222) qui est dirigé vers l'échelle (10), des faisceaux de rayons d'une trajectoire du rayon de balayage, qui sont émis par une source de lumière (21), et le réseau de balayage (22.1, 22.2, 22.3 ; 122 ; 222) étant sollicités une ou plusieurs fois, et
- le réseau de balayage (22.1, 22.2, 22.3 ; 122 ; 222) comprenant au moins un premier et un deuxième matériau de réseau (122.1, 122.2 ; 222.1, 222.2) qui sont disposés de manière alternée, au moins le premier matériau de réseau (122.1 ; 222.1) ayant un indice de réfraction différent de celui du deuxième matériau de réseau (122.2 ; 222.2) et une dureté différente de celle du deuxième matériau de réseau (122.2 ; 222.2),

la surface de la plaque de balayage (22 ; 122 ; 222) qui est dirigée vers l'échelle (10) étant plane et formant l'extrémité exposée de la plaque de balayage (22 ; 122 ; 222) en direction de l'échelle (10), **caractérisé en ce que** la surface de la plaque de balayage (22 ; 122 ; 222) comporte au moins un des matériaux de réseau (122.1, 122.2 ; 222.1, 222.2).

2. Dispositif de mesure de position optique selon la revendication 1, **caractérisé en ce qu'**une couche de planarisation continue (122.3) d'une épaisseur de couche définie et en l'un des matériaux de réseau (122.2) est disposée au-dessus des matériaux de réseau (122.1, 122.2 ; 222.1, 222.2), disposés de manière alternée, du réseau de balayage (22.1, 22.2, 22.3 ; 122 ; 222).

3. Dispositif de mesure de position optique selon l'une au moins des revendications précédentes, **caractérisé en ce que** les duretés des premier et deuxième matériaux de réseau (122.1, 122.2 ; 222.1, 222.2) diffèrent l'une de l'autre d'au moins un facteur 2.

4. Dispositif de mesure de position optique selon la revendication 3, **caractérisé en ce que** les duretés des premier et deuxième matériaux de réseau (122.1, 122.2 ; 222.1, 222.2) diffèrent l'une de l'autre d'au moins un facteur supérieur à 3.

5. Dispositif de mesure de position optique selon l'une au moins des revendications précédentes, **caractérisé en ce que** le deuxième matériau de réseau (122.2 ; 222.2) a une dureté inférieure à celle du premier matériau de réseau (122.1 ; 222.1).

6. Dispositif de mesure de position optique selon l'une au moins des revendications précédentes, **caractérisé en ce que** le premier matériau de réseau (122.1 ; 222.1) est du SiC, c'est-à-dire du carbure de silicium, et le deuxième matériau de réseau (122.2 ; 222.2) est du $SiO_xN_y$, c'est-à-dire de l'oxynitrure de silicium, avec le choix suivant : x = [0,5...2] et y = [0...0,5].

7. Dispositif de mesure de position optique selon l'une au moins des revendications précédentes, **caractérisé en ce que**
pour les parties réelles des indices de réfraction des matériaux de réseau (122.1, 122.2 ; 222.1, 222.2), on a

$$| \; n1 \; - \; n2 \; | \; \geq \; 0,5,$$

avec

n1 := partie réelle de l'indice de réfraction du premier matériau de réseau,
n2 := partie réelle de l'indice de réfraction du deuxième matériau de réseau.

8. Dispositif de mesure de position optique selon l'une au moins des revendications précédentes, **caractérisé en ce que** le corps de support (124 ; 224) est en l'un des matériaux suivants :

- verre Borofloat,
- verre de silicate de sodium,
- verre de quartz,
- Zérodur.

9. Dispositif de mesure de position optique destiné à détecter la position de deux objets mobiles l'un par rapport à l'autre, ledit dispositif comprenant

- une échelle (10) qui est reliée à l'un des deux objets, et

- une unité de balayage (20) qui est reliée à l'autre objet et qui comprend au moins une plaque de balayage (22 ; 322 ; 422) pourvue d'au moins un réseau de balayage (22.1, 22.2, 22.3 ; 322 ; 422) disposé sur un corps de support (324 ; 424) et agencé du côté de la plaque de balayage (22 ; 322 ; 422) qui est dirigé vers l'échelle (10), des faisceaux de rayons d'une trajectoire du rayons de balayage, qui sont émis par une source de lumière (21), et le réseau de balayage (22.1, 22.2, 22.3 ; 322 ; 422) étant sollicités une ou plusieurs fois, et

- le réseau de balayage (22.1, 22.2, 22.3 ; 322 ; 422) comprenant au moins un premier et un deuxième matériau de réseau (322.1, 322.2 ; 422.1, 422.2) qui sont disposés de manière alternée, au moins le premier matériau de réseau (322.1 ; 422.1) ayant un indice de réfraction différent de celui du deuxième matériau de réseau (322.2 ; 422.2),

la surface de la plaque de balayage (22 ; 122 ; 222) qui est dirigée vers l'échelle (10) étant plane et formant l'extrémité exposée de la plaque de balayage (22 ; 322 ; 422) en direction de l'échelle (10), **caractérisé en ce que** seules les zones de réseau de balayage comprenant le premier matériau de réseau (322.1, 422.1) sont recouvertes d'une couche de protection (325 ; 425) qui a une dureté qui est supérieure d'au moins un facteur 2 à la dureté du premier matériau de réseau (322.1 ; 422.1).

10. Dispositif de mesure de position optique selon la revendication 9, **caractérisé en ce qu'**une couche de planarisation continue (322.3) d'une épaisseur de couche définie et en l'un des matériaux de réseau (322.1) est disposée au-dessus des matériaux de réseau (322.1, 322.2 ; 422.1, 422.2), disposés de manière alternée, du réseau de balayage (22.1, 22.2, 22.3 ; 322 ; 422).

11. Dispositif de mesure de position optique selon la revendication 9 ou 10, **caractérisé en ce que** les duretés de la couche de protection (325 ; 425) et du premier matériau de réseau (322.1 ; 422.1) diffèrent l'une de l'autre d'au moins un facteur supérieur à 3.

12. Dispositif de mesure de position optique selon l'une au moins des revendications 9 à 11, **caractérisé en ce que** la couche de protection (325 ; 425) a une épaisseur maximale de 10 nm.

13. Dispositif de mesure de position optique selon l'une au moins des revendications 9 à 12, **caractérisé en ce que** du $Ta_2O_5$, c'est-à-dire du pentoxyde de tantale, est choisi comme premier matériau de réseau (322.1 ; 422.1) et du $SiO_xN_y$, c'est-à-dire de l'oxynitrure de silicium, est choisi comme deuxième matériau de réseau (322.2 ; 422.2), avec x = [0,5...2] et y = [0...0,5] et la couche de protection (325 ; 425) est en SiC, c'est-à-dire en carbure de silicium.

14. Dispositif de mesure de position optique selon l'une au moins des revendications 9 à 12, **caractérisé en ce que** pour les parties réelles des indices de réfraction des matériaux de réseau (322.1, 322.2 ; 422.1, 422.2), on a

$$| \; n1 \; - \; n2 \; | \; \geq \; 0.5$$

avec

n1 := partie réelle de l'indice de réfraction du premier matériau de réseau,
n2 := partie réelle de l'indice de réfraction du deuxième matériau de réseau.

15. Dispositif de mesure de position optique selon l'une au moins des revendications 9 à 14, **caractérisé en ce que** le corps de support (324 ; 424) est en l'un des matériaux suivants :

- verre Borofloat,
- verre de silicate de sodium,
- verre de quartz,
- Zérodur.

FIG. 1

FIG. 2

122.2  122.1

120

122

122.3

124

-z
y  x

FIG. 3

222.2  222.1

222

224

220

-z
y  x

## FIG. 4

325   322.2

322.3

322

322.1

324

-z
y    x

320

## FIG. 5

425   422.2

422

422.1

424

-z
y    x

420

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3355034 A1

- EP 1901041 A2